# EUROPÄISCHE PATENTSCHRIFT

(11) **EP 1 144 239 B1**
(45) Veröffentlichungstag und Bekanntmachung des Hinweises auf die Patenterteilung: **25.09.2002**
(21) Anmeldenummer: 99964467.7
(22) Anmeldetag: 22.12.1999
(51) Int. Cl.: B62D 39/00, B62D 31/00, B60F 3/00, B60K 7/00

(54) **FAHRZEUG**
VEHICLE
VEHICULE

(30) Priorität: 22.12.1998 DE 19860562
(43) Veröffentlichungstag der Anmeldung: 17.10.2001
(73) Patentinhaber: Radebold, Walter, 21371 Torsterglope (DE); Radebold, Helmut, 25348 Glückstadt (DE); Radebold, Reinhart, 14089 Berlin (DE)
(72) Erfinder: RADEBOLD, Reinhart, D-14089 Berlin (DE)
(74) Vertreter: Ninnemann, Detlef, Dipl.-Ing.
(86) Internationale Anmeldenummer: DE9904111
(87) Internationale Veröffentlichungsnummer: WO00037304

(56) Entgegenhaltungen:
- WO-A-93/15923
- DE-A- 19 613 446
- FR-A- 1 522 417
- FR-A- 2 033 610
- FR-A- 2 413 229
- FR-A- 2 630 868
- GB-A- 1 332 025
- US-A- 1 788 151
- US-A- 4 489 976
- US-A- 5 002 309
- US-A- 5 383 683
- US-A- 5 465 806
- PATENT ABSTRACTS OF JAPAN vol. 010, no. 062 (M-460), 12. März 1986 (1986-03-12) & JP 60 209329 A (KOGYO GIJUTSUIN;OTHERS: 0J), 21. Oktober 1985 (1985-10-21)

## Beschreibung

Die Erfindung betrifft ein Fahrzeug nach dem Oberbegriff des Anspruchs 1.

### Stand der Technik:

Der Trend in der heutigen Entwicklung von PKW geht einerseits zu großen, stark motorisierten Fahrzeugen im Luxusbereich, andererseits zu kompakten Kleinwagen mit sparsamem Verbrauch an Treibstoff, möglichst ohne erhebliche Reduzierung der maximalen Leistung. Beiden Richtungen gemeinsam ist der Antrieb in Form eines zentralen Verbrennungsmotors, der mechanische Energie abgibt und an die Räder überträgt über schaltbare Getriebe, Kupplungen und Ausgleichswellen. Ein solcher Antrieb hat notwendigerweise starken Einfluß auf das Konzept des Fahrzeuges, etwa auf Gestaltung und Einbau von Motor und Getriebe. Hinzu kommt, daß thermodynamische Arbeitsmaschinen mit Kolbentrieb grundsätzlich starke Geräusche machen, wegen der Mechanik ölgeschmiert sein müssen, und wegen des doch geringen Wirkungsgrades etwa das Doppelte der motorischen Leistung in Form von Wärme an die Umgebung abgeben. Aus diesem Grund ist das "Prinzip Postkutsche" nie aufgegeben worden: Der Fahrgastraum ist als Kasten streng abgeschottet vom Antrieb, wegen der Geräusche, der Belästigung durch Öl und Abstrahlung von Wärme. Der Antrieb ist separat mit Getriebe, Lenkung, Hilfsbetrieben und elektrischem Energiespeicher im von unten und teilweise auch seitlich offenen Motorraum untergebracht.

Elektronik faßt Fuß im modernen PKW, kann aber entscheidende Vorgänge wie die Steuerung der Verbrennung und den Antrieb der Ventile kaum beeinflussen.

Ungeachtet der kontinuierlicher Bemühungen zahlreicher Designer, Fahrzeuge in immer neuer Gestalt erscheinen zu lassen, mit unterschiedlichsten Rundungen, Formen für Türen, Fenster und Scheinwerfer, mit Radverkleidungen, Vorbauten und modischen Spielereien wie farblichen Wechseltableaus, ist im Grundsatz, mit den Augen des Ingenieurs gesehen, am Konzept nichts geändert worden. Es darf dabei nicht übersehen werden, daß den Ingenieuren, die in diese vorgegebenen Formen ein sicheres und wirtschaftliches Fahrzeug einzubauen haben, erhebliche Fortschritte gelungen sind hinsichtlich Leichtbau, neuer Materialien und Verbindungstechniken, Steigerung des Motorwirkungsgrades und Sicherheit - Fortschritte, auf die auch die vorliegende Erfindung teilweise zurückgreift. Aber auch sehr moderne Ansätze beharren auf der abgetrennten Passagierzelle, indem der Antrieb unter diese verlagert wird.

Fortschritte wurden gemacht, um die gleiche Bodengruppe für unterschiedliche Aufbauten zu nutzen. Neu aufgelegt ist auch das Verfahren, den Wagenkasten und die Karosserie teilweise aus Rohren oder Profilen aufzubauen und diese mit Blechen außen zu verkleiden.

Seit etwa 10 Jahren ist die Frage des elektrischen Antriebes von Fahrzeugen diskutiert und, soweit es Akku-Fahrzeuge betrifft, in Großversuchen erprobt worden. Hier bei wurde der Verbrennungsmotor durch einen Elektromotor, meist durch einen Gleichstrommotor ersetzt und an das vorhandene Getriebe angeflanscht; der Akku als Speicher elektrischer Energie bzw. als Wandler von chemischer in elektrische Energie wurde teils in den Fahrgastraum, teils in der Gepäckraum integriert. Es kamen Flottenfahrzeuge zum Einsatz mit der Notwendigkeit, Fahrwerk und tragende Elemente wegen der Masse des Akkus zu verstärken. Die erhöhte Fahrzeugmasse, die sehr eingeschränkte Reichweite des Fahrzeuges und die geringe Beschleunigung ließen diesen Weg als unwirtschaftlich und unattraktiv erscheinen.

Neuerdings wurden Konzepte zur Nutzung von chemoelektrischen Wandlern, insbesondere von H₂/O₂-Brennstoffzellen zur Bereitstellung elektrischer Energie an Bord des Fahrzeuges vorgestellt. Die Reichweite dieser Fahrzeuge ist nur durch den Wasserstoffspeicher beschränkt. Als Beispiele wurden Linien- bzw. Flughafenbusse gewählt, die über Tankstellen für flüssigen oder hochkomprimierten Wasserstoff längs ihrer Route verfügen. Das wurde ausgedehnt auf Transporte und PKW der gehobenen Klasse. Auch hier kommen Serienfahrzeuge entsprechend modifiziert zum Einsatz, da die Frage einer grundsätzlichen Neuorientierung im Fahrzeugbau in diesem Zusammenhang nie aufgeworfen wurde (abgesehen von futuristischen Entwürfen für die Außenhaut). Die Möglichkeiten der neuen Antriebstechnologie wurden nicht ausgelotet. Das bedeutet, die neue Technologie wurde an bestehende Strukturen und Vorgaben angepaßt.

Ein grundlegend anderes Konzept stammt von Porsche und besteht darin, daß eine Kette aus miteinander gekoppelten lenkbaren Wagen gebildet wird, und auf einem der Wagen sich ein zentraler Verbrennungsmotor mit Stromerzeuger befindet, dessen elektrische Energie an elektrische Motoren in den Radnaben der einzelnen Wagen übertragen wird. Dieses Konzept, das wohl erstmalig den Einzelradantrieb beinhaltet, wurde etwa 1916 entwickelt, um schwere Lasten (zerlegte Geschütze und Munition) sowie die zugehörigen Mannschaften über steile Behelfsstraßen im Gebirge zu befördern. Es wird heute, auf Einzelfahrzeuge beschränkt, mit hydraulischer Energieübertragung und Hydraulikmotoren in den Radnaben in Spezialfahrzeugen (z. B. Pistenräumer und Baumaschinen) verwirklicht.

Aus dem gattungsgemäßen Dokument FR-A-2 413 229 ist ein Fahrzeug mit einem Akkumulator als chemoelektrischen Speicher und einem Verbrennungsmotor als Antrieb bekannt, der über Ketten oder Getriebe mit den Antriebswalzen verbunden ist. Das Tragwerk ist als Teil eines aus dem Tragwerk und einem Fahrwerk gebildeten Fahrzeugkörper ausgebildet und aus Blechen und Stäben zusammengesetzt, um zwei um eine Achse gegeneinander drehbare käfigartige Zellen auszubilden, in denen Fahrgäste und Ladung Platz finden. Die Stäbe und Bleche bilden die Umhüllung des nutzbaren Raumes.

Da das bekannte Fahrzeug aus zwei Fahrzeugkörperhälften besteht, die jeweils eine starre Achse als zentrales Bestandteil des Fahrwerkes enthalten, läßt sich das Fahrzeug nur durch Drehung der beiden Hälften gegeneinander und/oder durch Änderung der Drehrichtung bzw. Abbremsen der auf den starren Achsen befindlichen Walzen jeweils auf einer Seite lenken. Weiterhin ist der Motor in einem der beiden Fahrzeugkörperhälften fest montiert und arbeitet von dort auf die Antriebswalzen.

Aus dem Dokument DE 196 13 446 A ist es bekannt, Fahrzeug-Zellen aus stabähnlichen Elementen zusammenzusetzen und mit Blechen zu verkleiden. Dabei werden jedoch nur mit erheblichem Aufwand an Pressen und Formen herstellbare dreidimensional geformte Strukturen und Oberflächen verwendet. Da es sich bei diesem bekannten Fahrzeug um ein durch Muskelkraft zu betätigendes Fahrzeug handelt, entfallen Vorkehrungen, um Probleme der Verbindung von Fahrwerk und Fahrzeugkörper bei höheren Geschwindigkeiten zu lösen.

Aus dem Dokument FR-A-1 522 417 ist es bekannt, modulare, einzeln anlenkbare Fahrwerke als Einzelantriebe mit einem Elektromotor zur Montage an einem Fahrzeug vorzusehen. Dabei wird der Antriebsmotor fest mit dem Rad gekoppelt und dementsprechend ungefedert gegenüber dem Fahrzeug montiert. Daraus ergibt sich, daß das Fahrzeug wegen der ungefederten Massen der Elektromotoren auf keine höhere Geschwindigkeit gebracht werden kann. Weiterhin stellen die verwendeten Elektromotoren Spezialanfertigungen dar, weil sie zum einen nur geringe Umdrehungszahlen abgeben dürfen und weil sie zum anderen völlig gekapselt gegen das Eindringen von Schmutz und Wasser sein müssen.

Aus dem Dokument US-A-5 002 309 ist ein Verfahren zur kosten-, zeit- und raumsparenden Fertigung von Fahrzeugen bekannt, deren Antrieb über einen Verbrennungsmotor und ein Getriebe realisiert wird. Für den Transport dieser Fahrzeuge auf Schienenfahrzeugen ist es erforderlich, jedem Fahrzeug elektrische Energie für Beleuchtung, Klimatisierung und Kommunikation der Fahrzeuginsassen zur Verfügung zu stellen, da es über keine mobile, autonome Energiequelle verfügt.

### Aufgabe der Erfindung

Dem Gegenstand der vorliegenden Erfindung liegt die Aufgabenstellung zugrunde, ein kompaktes, robustes und mit einfachen Mitteln und geringen Kosten herstellbares Fahrzeug zu schaffen, das auf der Technologie chemoelektrischer Wandler in Verbindung mit einem Elektromotor basiert und sich sowohl zum sicheren Transport von Personen und Gütern als auch zur dezentralen Abgabe elektrischer Energie eignet.

### Lösung der Aufgabe

Das erfindungsgemäße Fahrzeug weist einen Antrieb aus einem chemoelektrischer Wandler (Brennstoffzelle) und nachgeschalteten Drehstrommotoren auf, einen Antrieb also, bei dem die Antriebsenergie intern elektrisch übertragen wird und dessen Funktion weitgehend durch Mikroelektronik bestimmt wird. Es weist weiterhin einen Fahrzeugkörper auf, der aus einem Tragwerk und einem modular aufgebauten Fahrwerk gebildet wird, wobei sowohl im Tragwerk als auch im Fahrwerk Einheiten des Antriebs angeordnet sind, und wobei das Tragwerk aus einem die Module des Fahrwerks aufnehmenden Plattentragwerk und einem mit dem Plattentragwerk verbundenen Stabtragwerk besteht, wobei das Plattentragwerk dreidimensional ausgebildet ist, aus modular neben- und hintereinander angeordneten, aus ebenen und gerollten Platten begrenzten Hohlräumen besteht und nach oben offen sowie nach unten und zu den Seiten geschlossen ist, und wobei das Stabtragwerk modular aus geraden Stäben und Knoten zusammengesetzt, nach unten offen sowie nach oben und zu den Seiten geschlossen ist.

Das Konzept besteht darin, daß erstens der Körper des Fahrzeuges durch ein räumliches (dreidimensionales) vorteilhaft rechtwinkliges, in Dreiecke aufgelöstes, modular und periodisch aufgebautes Tragwerk aus ebenen Platten, im Grenzfall Blechen, und geraden Stäben, im Grenzfall Hohlprofilen gebildet wird, das in allen drei Achsen bei Unfällen starke Kräfte aufnehmen kann, das nach außen wasserdicht und teilweise transparent abgeschlossen und schwimmfähig ist, und in dessen Zwischenräume der Wandler, seine Hilfsbetriebe und Tanks, Sitzplätze für Fahrer und Mitfahrer, Stauräume für Zuladungen und sonstige Geräte integriert sind, und daß zweitens der Körper des Fahrzeugs durch ein modular aufgebautes Fahrwerk als Einzelrad-Fahrwerk, bestehend aus Teleskop-Federbein mit integriertem E-Motor und Umlenkgetriebe getragen, gelenkt und fortbewegt wird, wobei im einfachsten Fall der Motor die Last des Fahrzeugkörpers, drehbar gelagert über Kugellager und Puffer, über sein Gehäuse auf das Teleskop und weiter auf das Rad überträgt und seine mechanische Leistung über eine in der Länge variierbare Antriebswelle im Teleskopbein, parallel zum Stoßdämpfer, über ein Umlenkgetriebe in der Drehzahl untersetzt auf das Rad überträgt, wobei am Flansch des Motors der Ansatz für das vorteilhaft modulare Lenksystem angebracht ist und das Teleskop, aus rechteckigen oder elliptischen Rohren bestehend, das Drehmoment zum Anlenken des Rades überträgt.

Die Konsequenz der hier beschriebenen Modularität für das Fahrwerk mit dem elektrischen Antrieb ist, daß ein Rechnersystem die Koordinierung und Abstimmung des Fahrwerkes, also von Antrieb und Bremsen, von Anlenkung und in Sonderfällen auch Federung jedes Einzelradfahrwerks übernehmen muß.

Dieses konzept bezieht sich insbesondere auf ein Fahrzeug, das es in dieser Konstellation bisher noch nicht gibt, weil es neben dem Transport von Passagieren und Gütern eine zusätzliche Funktion ausüben kann. Es ist ein rollendes dezentrales Kleinkraftwerk, das im geparkten Zustand elektrische Energie an Verbraucher oder ein Netz abgeben kann. Es ist diese Doppelfunktion, die beispielsweise einem solchen Fahrzeug in Form eines kompakten PKW in Zukunft eine andere Bedeutung und einen anderen Kostenrahmen gibt, die vor allem aber eine andere Betrachtung der Wirtschaftlichkeit gestattet, und die nachhaltig die Struktur der Energieversorgung beeinflussen dürfte. Dies gilt in besonderem Maße für Länder, denen die breite Motorisierung erst noch bevorsteht und in denen die Energieversorgung über elektrische Netze nicht flächendeckend ist. Aus diesem Grunde ist es einerseits legitim, sich mit Formen für das Fahrzeug zu befassen, die allein aus der Funktion resultieren, andererseits notwendig, über neue Verfahren der Fertigung ohne dreidimensional großflächig verformte Bauteile und über unkonventionelle Werkstoffe nachzudenken. Dabei macht es Sinn, auf bewährte Bauteile und Verfahren des konventionellen Fahrzeugbaus so weit wie möglich zurückzugreifen. Es versteht sich, daß ein solches Fahrzeug nach dem neuen Konzept robust, geländegängig, hochbeinig und nach Möglichkeit auch schwimmfähig sein sollte.

Das Konzept gestattet es, Fahrzeuge fast beliebiger Funktion und Größe zu entwerfen und zu fertigen, bis hinunter zu Kompaktfahrzeugen. Insbesondere bei letzteren, deren Sicherheit bei Unfällen ein besonderes Thema darstellt, führt das neue Verfahren zu erheblichen Verbesserungen. Allgemein läßt sich sagen, daß die Entwicklung und die Fertigung von Fahrzeugen nach dem neuen Verfahren, aber auch das Recycling sehr viel einfacher und wirtschaftlicher sind als die heutigen Methoden; es können Werkstoffe eingesetzt werden, die bisher im Automobilbau kaum Verwendung finden.

### Voraussetzungen der Erfindung

Die vorliegende Erfindung geht den Weg, daß sie von der neuen Technologie des chemoelektrischen Antriebs ausgeht und dabei überlegt, wie das Fahrzeug auf die Bedürfnisse und Möglichkeiten der neuen Technologie zugeschnitten werden kann.

Was sind die wesentlichen Eigenschaften der chemoelektrischen Technologie im Unterschied zur Technologie der motorischen, auf Wärmekraftmaschinen aufbauende Antriebe ?
1. Es wird nach wie vor chemische Energie umgesetzt, jedoch nicht primär in Wärme hoher Temperatur bei der Verbrennung im Motor, und dann weiter in mechanische Arbeit, (als Produkt von Drehzahl und Drehmoment) sondern isotherm, nahe der Umgebungstemperatur direkt in elektrische Energie (als Produkt von Spannung und Strom).
2. Betankt wird das Fahrzeug nicht mit Kohlenwasserstoffen wie Benzin oder Dieseltreibstoff, sondern entweder direkt mit verflüssigtem Wasserstoff bei -253°C oder hochkomprimiertem gasförmigen Wasserstoff bei etwa 200 bar oder aber mit Methanol oder beispielsweise mit dem pulverförmigen, wasserlöslichen Wasserstoffüberträger Glucose bei Normaltemperatur und Normaldruck. Alle chemoelektrischen Fahrzeuge sind luftatmend, es sei denn, sie führen den benötigten Sauerstoff in Sonderfällen beispielsweise in Form von wässrigem H₂O₂ mit. Dann ist eine doppelte Betankung erforderlich.
3. Die an Bord bereitgestellte elektrische Energie wird unmittelbar an einen oder mehrere elektrische Motoren an die Räder abgegeben. Da chemoelektrische Wandler grundsätzlich Spannungen im Bereich um 1 V bei entsprechend hohen Strömen abgeben, sind unterschiedliche Maßnahmen erforderlich, um elektrische Motoren als Serienprodukte einsetzen zu können. Der übliche Weg besteht in der Hintereinanderschaltung sehr vieler Wandler, um höhere Spannungen zur Verfügung zu haben zwecks Anschluß von Gleichstrommaschinen oder zur Umformung in Drehstrom zwecks Anschluß von Asynchronmotoren. Ein anderer Weg wird durch das Patent DE 195 19 123 ermöglicht und in der Patentanmeldung 198 21 980.6 näher erläutert; es handelt sich um den Einsatz eines chemoelektrodynamischen Wandlers, der direkt frequenzvariable Drehströme abgeben kann.
4. Geräusche entstehen allein durch die Elektromotoren und Hilfsbetriebe. Mechanische Getriebe sind im Prinzip entbehrlich und werden durch moderne elektronische Schaltungen auf der Basis von Halbleitern zur Ansteuerung der elektrischen Motoren eingesetzt. Jegliche Ölschmierung mit eigenen Kreisläufen entfällt; Hilfsbetriebe und Radlager haben Dauerschmierung. Da der Wirkungsgrad der chemoelektrischen Wandlung theoretisch nahe 100 % liegt, im Betrieb zwischen 60 und 70 % betragen dürfte, beläuft sich die abzuführende Wärme nicht auf das Doppelte sondern nur auf etwa 1/3 der Antriebsleistung. Der Wandler selbst strahlt kaum Wärme ab wegen seiner geringen Betriebstemperatur. Die möglichst außengekühlten Elektromotoren geben ihre Verlustwärme an Luft ab.

Die vorliegende Erfindung geht zusätzlich davon aus, daß sich die breite Einführung der neuen chemoelektrischen Technologie in Zukunft auf solche Wandler konzentrieren wird, deren Betankung mit Wasserstoffüberträgern bei Normaltemperatur und Normaldruck geschieht. (Wandler, bei denen gasförmiger oder flüssiger Wasserstoff mitgeführt wird, dürften wegen möglicher Leckagen insbesondere bei Unfällen ein stetes Sicherheitsrisiko darstellen). Unter diesen Prämissen kann das bisherige Konstruktionsprinzip, d.h. die Trennung von Fahrgastraum und Raum für die Energiewandler, aufgehoben werden. Dadurch, daß die mechanische Ankopplung eines einzigen Verbrennungsmotors an die Räder entfällt, werden neue Freiheitsgrade für den Aufbau des Fahrzeuges und für den Anschluß auch mehrerer Motoren gewonnen.

Als Folge davon erscheint es sinnvoll, die Denkweise, wie sie im Schiff- und Flugzeugbau, vor allem auch in der Mikroelektronik vorherrschend ist - Konzentration auf wenige Komponenten und modularen Aufbau - auch auf die Entwicklung und den Bau von leichten und insbesondere kompakten Fahrzeugen zu übertragen. 1943 wurde erstmalig im Schiffbau (U-Boote) die Segmentbauweise eingeführt mit fertig ausgerüsteten Segmenten, die erst bei der Endmontage zusammengesetzt werden. Das ist heute Basis für den Bau sehr großer Containerschiffe; es bietet den im Wettbewerb entscheidenden Vorteil, daß das gesamte Schiff während der Entwicklung und auch während des Baus über eine mathematische Beschreibung im Rechner dokumentiert, verfolgt und gesteuert werden kann. Der große Erfolg der Mikroelektronik wiederum beruht auf dem Einsatz integrierter Bausteine, von Platinen und Einschüben sowie auf modular aufgebauten Programmen.

### Beschreibung der Erfindung

Das Fahrzeug gemäß der vorliegenden Erfindung wird - sieht man von dem chemoelektrodynamischen Wandler ab - aus den drei Komponenten : Plattentragwerk (1), Einzelrad-Fahrwerk (2), Stabtragwerk (3), die sich durch ein gemeinsames Koordinatensystem (4) mathematisch beschreiben lassen, zusammengesetzt.

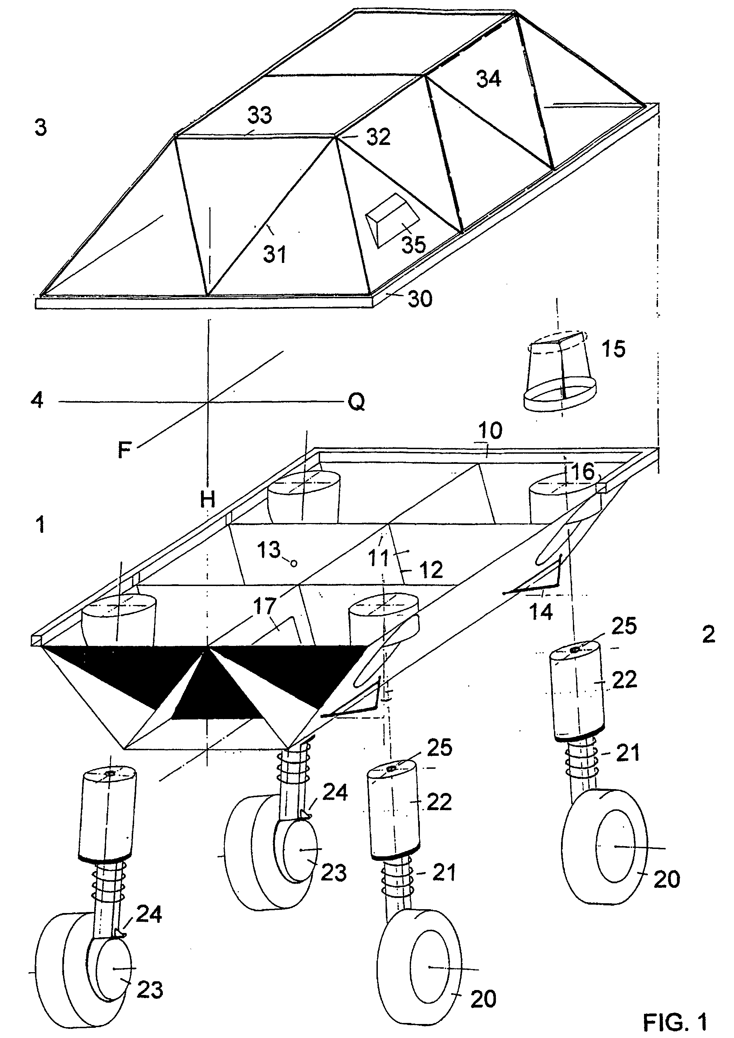

Figur 1 zeigt
- **das modular aufgebaute räumliche Plattentragwerk (1)** aus ebenen Platten (11), aus gerollten Platten (16), die durch Nähte (12) verbunden sind, und aus Käfigen (15) als Abschluß von (16),. Das Plattentragwerk ist nach unten und zu den Seiten wasserdicht abgeschlossen und nach oben offen. Es ist mit einem umlaufenden Rahmen (10) versehen. Seine Räume (13) sind teilweise von oben und von der Seite direkt oder über Öffnungen (17) indirekt zugänglich.
- **das Einzelrad-Fahrwerk** (2) aus Teleskop-Federbein (21) mit integriertem Elektromotor (22) und Umlenk- und Untersetzungsgetriebe (23). Das Einzelrad-Fahrwerk ist grundsätzlich über einen eigenen Antrieb anlenkbar, das Drehmoment wird über das Teleskop übertragen, das aus diesem Grunde aus rechteckigen oder elliptischen Rohren gebildet wird. Das Fahrwerk wird über die Drehpunkte (24) und (25) mit dem Plattentragwerk (1) verbunden;
- **das modular aufgebaute räumliche Stabtragwerk (3)** aus Stäben (31) und Knoten (32), das nach oben und den Seiten wasserdicht, ganz oder teilweise transparent über die Hülle (33) abgeschlossen und nach unten offen ist, und das ebenfalls mit einem Rahmen (30) der gleichen Abmessungen wie das Plattentragwerk versehen ist. Im Tragwerk befinden sich auch der Einstieg (34) in das Fahrzeug über eine Flügeltür. Die Be- und Entlüftung geschieht über Öffnungen (35).
- **das gemeinsame Koordinatensystem (4)** mit den Achsen F in Fahrtrichtung, Q quer dazu und H in der Höhe.

Platten- und Stabtragwerk bilden den Körper des Fahrzeugs. Beide Tragwerke sind in statisch stabile Dreiecke aufgelöst und können daher Kräfte in allen drei Achsen aufnehmen. Platten und Stäbe übernehmen, jeder für sich in seinem Tragwerk, alle auftretenden Kräfte. Die Platten an der Außenseite des Tragwerks haben die zusätzliche Funktion, das Tragwerk von unten und seitlich gegen die Umgebung wasserdicht abzuschließen; sie sind keine Verkleidung.

Die Trennung in Platten- und Stabtragwerke ergibt sich zwingend aus der einfachen Bauweise; sie läßt sich, denkt man an den Rahmen des Plattentragwerkes aus Hohlprofilen, nicht in völliger Konsequenz einhalten. Ein wesentliches Merkmal der vorliegenden Erfindung ist, daß keine großflächig dreidimensional verformten Bleche wie im Automobilbau üblich zum Aufbau des Fahrzeuges benötigt werden.

Das Plattentragwerk (1) bildet, wie die Figur 1 andeutet, praktisch eine Brücke, die sich auf die 4 Einzelrad-Fahrwerke abstützt. Die Module werden von unten in die Fahrwerkschächte (16) eingeführt, die leicht schräg eingebaut sind. Die Käfige (15), die auf den Fahrwerkschächten (16) aufgesetzt und mit diesen lösbar verbunden wird, stellen den Kraftschluß und die Verbindung zwischen den Einzelrad-Fahrwerken (2) und dem Plattentragwerk (1) dar und übertragen die Last auf den Boden. Das Einzelrad-Fahrwerk ist über den Drehpunkt (24) an die Radführung (14) und über den Drehpunkt (25) an den Käfig (15) gekoppelt. In das Plattentragwerk sind der chemoelektrodynamische Wandler mit seinen Hilfsbetrieben, die Tanks für den Wasserstoffträger, das Rechnersystem und die Kabel sowie die Sitzplätze für die Fahrgäste und Räume für die zu transportierenden Güter integriert. Das Stabtragwerk (3) bildet den Schutz und die Komplettierung des Fahrzeuges nach oben. Es stellt sowohl eine kompakte Überrollstruktur als auch eine Verstärkung des Plattentragwerkes dar. Beide Tragwerke sind leicht lösbar miteinander über die Rahmen (10) und (30) verbunden und können je nach Einsatzzweck des Fahrzeuges ausgewechselt werden.

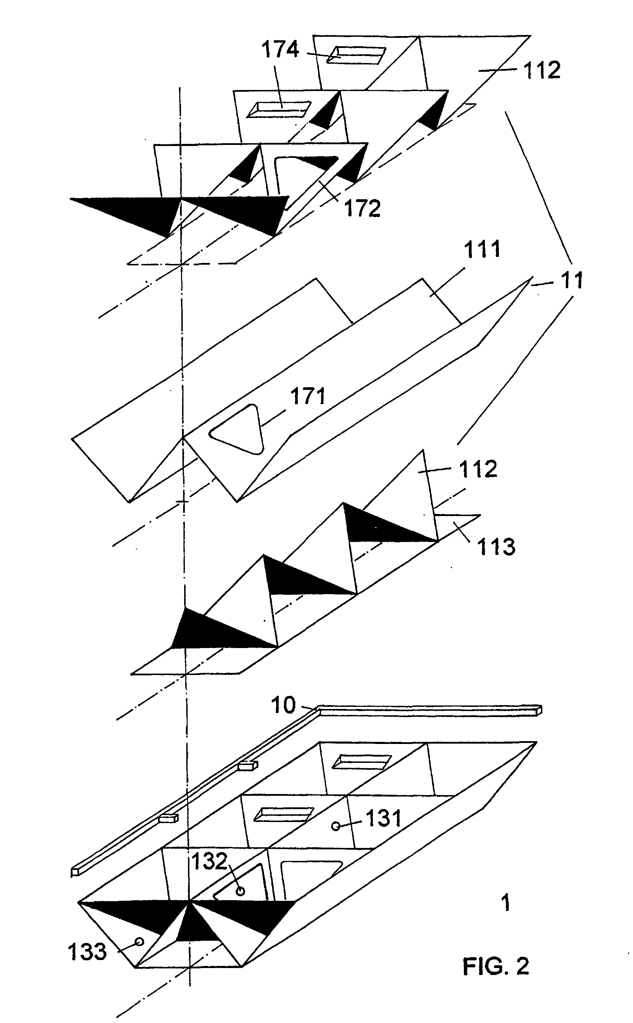

Den Aufbau des Plattentragwerkes aus Modulen zeigt Figur 2 in Form einer Explosionszeichung, und zwar für den einfachsten Fall des Aufbaues aus Pyramiden mit der Höhe des Tragwerkes. In den oberen drei Darstellungen sind die Querplatten (112) sowie die Längsplatten (111) und die Bodenplatte (113) gezeigt. Durch das Zusammenfügen der Platten entstehen Räume (13), von denen die einen oben (131) oder seitlich (133) offen sind, die anderen (132) nur über Durchbrüche (171) und (172) erreichbar sind. In die Querplatten (112) werden beispielsweise Einbuchtungen (174) zur Aufnahme von Sitzen (182) eingebracht. Die untere Darstellung zeigt das komplette Plattentragwerk mit seinen Rahmen (10) aus Vierkantprofilen, der das Plattentragwerk abschließt, jedoch aus Gründen der Übersichtlichkeit nicht vollständig dargestellt ist.

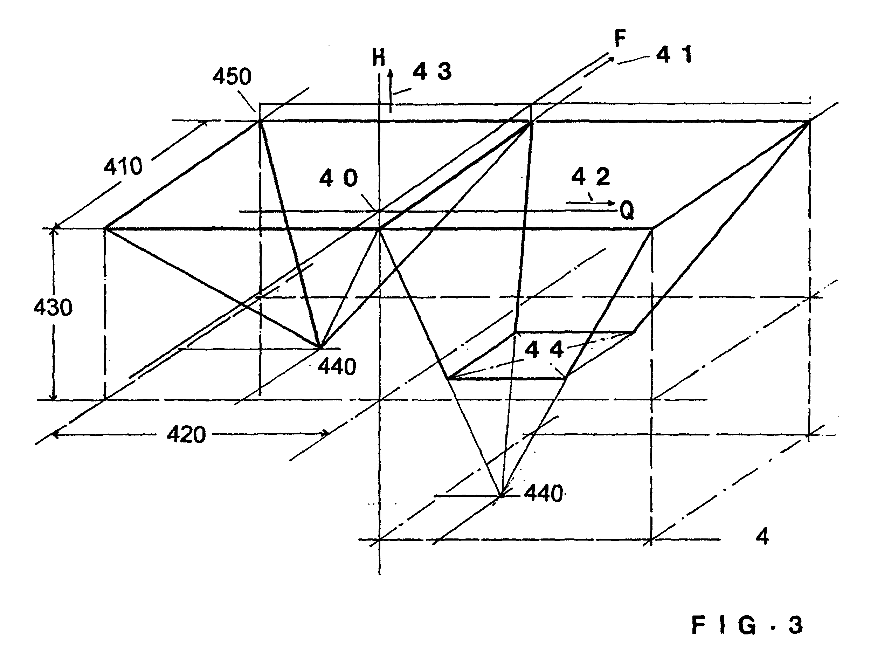

Es sind kompliziertere Konfigurationen möglich, die andere Platzverhältnisse schaffen und in denen Pyramidenstümpfe das Muster bilden. Diese Möglichkeiten sind in Figur 3 gezeigt. Grundsätzlich kann man das Plattentragwerk (1) wie auch das Stabtragwerk (3) mathematisch und auch anschaulich dadurch beschreiben, daß man es als eine Aneinanderreihung von Pyramiden auffaßt, die nach unten bzw. nach oben zeigen. Entscheidende Parameter sind die Abmessungen der Grundfläche der Pyramide, die gleichzeitig das Rastermaß bilden in Fahrtrichtung a_{F} (410) und a_{Q} (420) quer dazu, sowie die Koordinaten (440) der Spitze dieser Pyramide. Der einfachste Fall ist dann gegeben, wenn die Höhe h der Pyramide mit der Höhe a_{H} (430) des Plattentragwerkes übereinstimmt. Dies ist links gezeigt. Die Höhe (450) des Rahmens schließt das Plattentragwerk bzw. (in umgekehrter Richtung) das Stabtragwerk ab.

Der Nullpunkt (40) des Koordinatensystems ist zweckmäßigerweise in die Ebene zwischen den beiden Rahmen gelegt. Das Koordinatensystem selbst ist mit seinen Achsen F (41), Q (42) und H (43) dann eindeutig bestimmt.

Kompliziertere Verhältnisse ergeben sich, wie das rechts gezeigt ist, wenn die Spitze der Pyramide (440) theoretisch außerhalb des Plattentragwerkes liegt und überdies die Pyramide unsymmetrisch ist. In beiden Flächen entsteht eine endliche Bodenfläche (44).

Weitere Parameter, die den Aufbau des Fahrzeuges definieren, sind die Anzahl der Module n_{F} in Fahrtrichtung und n_{Q} Querrichtung sowie die Anzahl Nₐ der aktiven und N_{P} der passiven Einzelradmodule. Das in Figur 1 gezeigte Beispiel stellt die einfachste Minimalkonfiguration für ein Kompaktfahrzeug dar mit n_{F} = 3 Modulen in Fahrtrichtung und n_{Q} = 2 Modulen in Querrichtung. Die Pyramiden sind symmetrisch, ihre Spitze berührt den Wagenboden, es ist a_{H} = h. Die Anzahl der aktiven Fahrwerke beträgt Nₐ = 4.

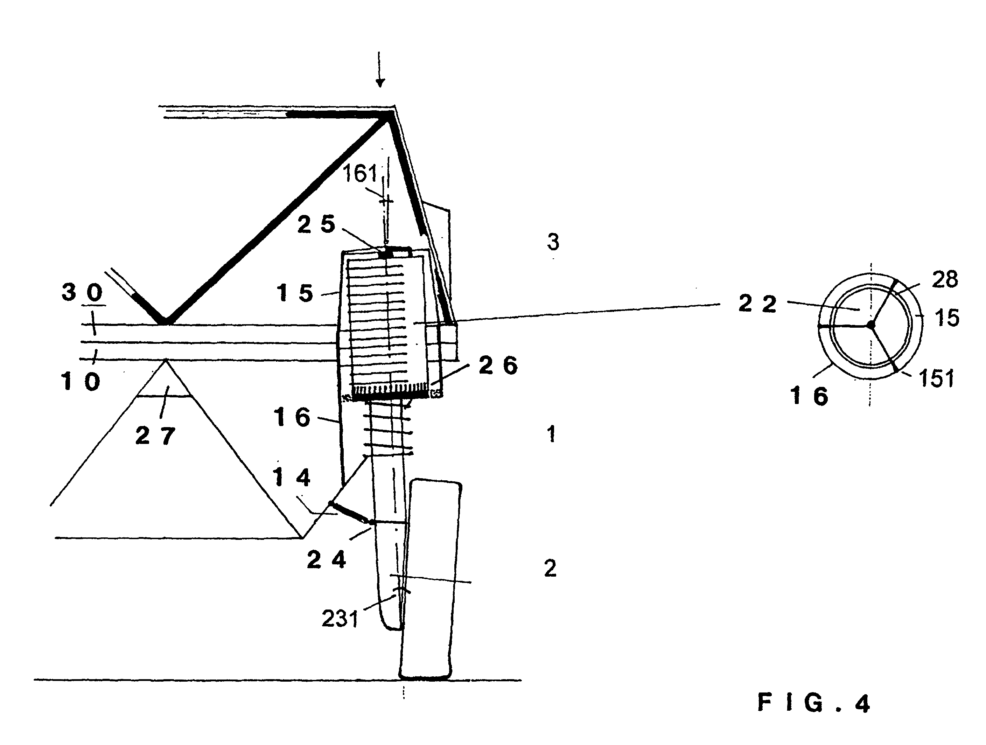

Die Figur 4 zeigt links als ein Beispiel den einfachen Einbau eines Einzelrad-Fahrwerkes (2) in den Körper des Fahrzeugs im Schnitt, rechts in der Draufsicht. Der Körper des Fahrzeugs besteht aus dem Plattentragwerk (1) und dem Stabtragwerk (3). Geschnitten ist der hintere rechte Fahrwerkschacht (16). Man erkennt unmittelbar den verbindenden Käfig (15) mit dem Drehpunkt (25) einerseits und die Radführung (14) mit dem Drehpunkt (24) andererseits. Die Radstellung (Sturz) ist durch den Winkel (161) des Schachtes (16) zur Senkrechten, durch den Winkel (231) zwischen Motorachse und Rad (20) sowie durch die Belastung des Fahrzeugs bedingt. Kabel für den Antrieb und die Elektronik sind in Kabelkanälen (27) untergebracht und können somit leicht montiert und auch demontiert werden.

Der Elektromotor (22) befindet sich fast senkrecht über dem Rad innerhalb des Körpers des Fahrzeuges in Höhe der Rahmen und ist mit dem Körper zusammen abgefedert; er treibt das Rad über eine verschiebbare Kardanwelle im Teleskop-Federbein (21) und das Umlenk- und Untersetzungsgetriebe (23) an. Das Getriebe ermöglicht es, auf die beim Automobilbau übliche Gelenkwelle und Durchdringung der Karosserie zu verzichten. Es hat gleichzeitig die Aufgabe, die doch sehr hohe Drehzahl des Elektromotors etwa um den Faktor 3 bis 7 je nach Einsatz des Fahrzeuges zu reduzieren; es trägt zum Sturz des Rades bei.

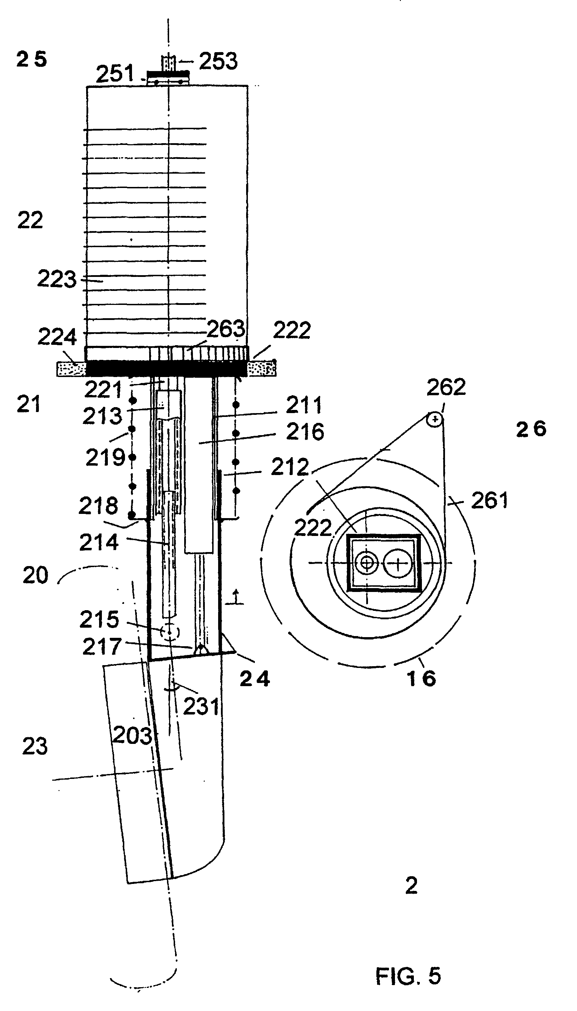

Die Anlenkung des Fahrwerkes geschieht über das modulare Lenksystem (26), das etwa auf der Höhe des Rahmens innerhalb des Plattentragwerkes eingebaut ist. Es greift am Flansch des Motors an. (Einzelheiten sind in Figur 5 gezeigt).

Der Käfig (15) ist fest an den Fahrwerkschacht (16) und damit an das Plattentragwerk angeschraubt. Dieser Käfig überträgt die Last des Fahrzeuges über den Drehpunkt (25), bestehend aus Gummipuffer mit Verschraubung und Kugellager wie bei konventionellen Federbeinen üblich, auf das Gehäuse des Motors und damit auf das Rad. Falls das Motorgehäuse die Belastung nicht tragen kann, ist eine Verstärkung vorgesehen. Dies ist ein Beispiel. Es sind kompliziertere Konstruktionen möglich, bei denen der Motor entlastet ist und die Belastung auf den Flansch übertragen wird.

Der Käfig (15), dargestellt als Dreibein (151) mit Umhüllung (152) dient gleichzeitig dazu, den Motor im Falle eines Unfalles vor dem Ausbrechen festzuhalten und so die Passagiere zu schützen. Die Hülle (152) dient dazu, den Strom der Kühlluft um den Motor zu gewährleisten, da es sich als vorteilhaft erweist, moderne außengekühlte Asynchronmotoren zu verwenden. Die Luft wird im Schlitz (283) spiralig geführt. Je nach Wetterlage kann die erwärmte Luft zum Heizen des Innenraumes verwendet werden.

Elektromotoren mit den hier angegebenen Abmaßen von etwa 220 mm Durchmesser und 380 mm Höhe haben eine Dauerleistung von 5,5 bis 6 kW bei 3.600 Umdrehungen/Minute; sie können das Fahrzeug bei entsprechender Untersetzung und der Verwendung normal bereifter Räder auf einer Geschwindigkeit von ca. 140 km/h halten. Beim Antrieb aller 4 Räder beträgt die installierte Dauerleistung rund 22 kW. Bekanntlich können Drehstrommotoren kurzzeitig über das Doppelte, etwa zur Beschleunigung des Fahrzeuges beim Überholen, und im 5-Minuten-Betrieb auf das etwa 1,5-fache belastet werden, so daß eine entsprechende Leistungsreserve zur Verfügung steht. Die Motoren werden einzeln elektronisch überwacht und können sich so den Gegebenheiten insbesondere bei Kurvenfahrten anpassen, ein mechanisches Ausgleichsgetriebe ist nicht vonnöten. Die mechanische Kopplung von Vorderrad- und Hinterradantrieb entfällt ebenfalls.

Für viele Anwendungen ist der Antrieb von jeweils nur einem Rad auf jeder Seite ausreichend. Die nicht angetriebenen, passiven Module besitzen die gleiche äußere Form. Es entfallen jedoch Motor und Umlenkgetriebe für diese Räder; die Lenkbarkeit bleibt bestehen. Für spezielle Einsätze sind oft sehr große Drehmomente bei relativ geringer Geschwindigkeit gefordert. In einem solchen Falle wird das Umlenkgetriebe durch einen Radnaben-Hydraulikmotor ersetzt. Die Energiezufuhr über Schläuche geschieht ebenfalls durch das Federbein; die elektrisch angetriebene Hydraulikpumpe befindet sich in dem Fahrzeug.

Figur 5 zeigt das Einzelrad-Fahrwerk (2) mit den Baugruppen Motor (22), Teleskop-Federbein (21), Umlenkgetriebe (23) und Lenksystem (26). Das Teleskop-Federbein (21) ist teilweise geschnitten. Die beiden Teleskoprohre (211) und (212) sind hier rechteckig gezeichnet. Sie enthalten innen die Antriebswelle (214), die außen verzahnt ist und in einer entsprechenden Buchse (213) steckt, die wiederum innen verzahnt ist, so daß beim Zusammendrücken des Federbeins (21) über die Federn (219) der Kraftschluß nicht unterbrochen wird. Die Buchse (213) steckt auf der Motorwelle (221). Die Feder (219) stützt sich auf den Federteller (218) und auf den Motorflansch (222) ab. Um den Sturz des Rades zu ermöglichen, ist ein Kardangelenk (215) erforderlich; es leitet die Antriebswelle in das 90°-Umlenkgetriebe (23) ein. Der Winkel zwischen der Antriebsachse und der Normalen zur Radachse ist (231) und liegt in der Größenordnung von etwa 6°. Im Teleskopbein ist auch der Stoßdämpfer (216) untergebracht, der über die Lasche (217) befestigt ist. (Die obere Aufhängung ist nicht gezeigt). Der Schnitt in axialer Richtung rechts daneben läßt erkennen, daß die Symmetrieachse des Teleskopbeines und die Antriebswelle des Motors nicht übereinstimmen; die Abweichung ist jedoch nur gering und wirkt sich vorteilhaft auf die Stabilität des Fahrwerks im angelenkten Zustand aus.

Am Übergang vom Teleskop-Federbein (21) zum Umlenkgetriebe (23) befindet sich der Drehpunkt (24) an das Plattentragwerk (1) über das schwenkbare Dreieck (14). Die zweite Kopplung ist durch das Kugellager (251) und den Gummipuffer (253) nebst Verschraubung auf dem Motor (22) gegeben.

Die Lenkbarkeit des Fahrwerkmoduls ist durch das modulare Lenksystem (26) gegeben. Es besteht aus dem Ansatz (263) am Motorflansch (222), beispielsweise für einen Zahnriemen oder eine Kette (261) und Ritzel mit Motor (262), und es dreht das Einzelfahrwerk. Anstelle der im Automobilbau üblichen Lenkhebelsysteme mit ihrem unterschiedlichen Kraftbedarf wird hier die Möglichkeit der individuellen Anlenkung jeden Rades eröffnet, wobei jetzt das Rechnersystem die Abstimmung des gesamten Fahrwerkes übernimmt. Aus Gründen der Sicherheit ist es vorteilhaft hinsichtlich der Parallelität eines Radpaares je zwei gegenüberliegende Fahrwerke nicht nur elektrisch über das Rechnersystem, sondern auch mechanisch, beispielsweise über einen gemeinsamen Zahnriemen oder Führungsstange, zu koppeln. Schlitze für den Zahnriemen sind im Fahrwerkschacht (16) vorgesehen. Der Motorflansch (222) ist gegenüber dem Fahrwerkschacht (16) durch eine elastische Dichtung (224) abgeschlossen, sodaß Feuchtigkeit und auch Luft von unten her nicht eindringen können. Die Kühlluft wird somit gezwungen, spiralig an den Kühlrippen (223) entlang zu streifen.

Das Umlenkgetriebe ist quasi ein Normteil, wie es vom Motorradbau her bekannt ist und enthält in der Radaufhängung eine mechanische Bremse (203).

Wir die Feder (219) durch ein Luftkissen ersetzt, dessen Druck regelbar ist, läßt sich die Federung für jedes Einzelradfahrwerk über das Rechnersystem kontrollieren.

Die elektronische Ausrüstung des Fahrwerks, insbesondere die Sensorik, ist nicht gezeigt.

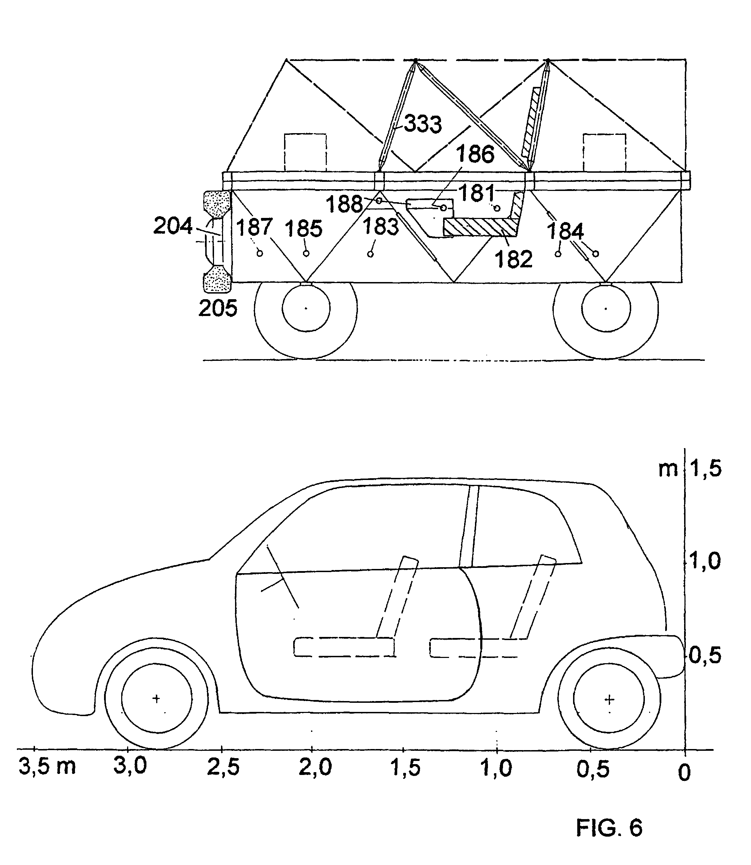

Der Vergleich verschiedenster PKW aus heutigen Baureihen zeigt, daß im Automobilbau ein Rastermaß von etwa 0,8 m in der Länge und der Breite vorherrscht. Überträgt man dieses Rastermaß auf den modularen Aufbau der Tragwerke, so entsteht ein Fahrzeug wie in Figur 6 oben im Schnitt gezeigt. (Der Schnitt läuft durch die seitliche Kante der Bodenplatte (113) ). Mit n_{Q} = 2 Modulen in der Breite und n_{F} = 3 Modulen in der Länge ergibt sich so ein Fahrzeug von 1,6 m Breite und 2,4 m Länge, zuzüglich der doppelten Rahmenbreite von je etwa 50 mm; der Achsabstand resultiert zu 1,6 m.

Die Raumaufteilung kann beispielsweise wie folgt geschehen : Tanks (187) sind in den von außen zugänglichen Räumen (133) untergebracht. Der chemoelektrische Wandler (185) füllt die beiden vorderen Module mit dem zwischenliegenden Hohlraum aus. Fahrer und Mitfahrer beanspruchen die mittleren Module als Sitzwanne (181) mit Sitz und Lehne (182) sowie den Fußraum (183). Der zwischen den mittleren Modulen liegende Hohlraum ist ebenfalls durch eine Öffnung zugänglich und enthält das Rechnersystem (186). Kabel (188) verlaufen auf den Kabeltrassen (27). Die hinteren Module nebst Hohlräumen sind für Zuladungen (184) verfügbar.

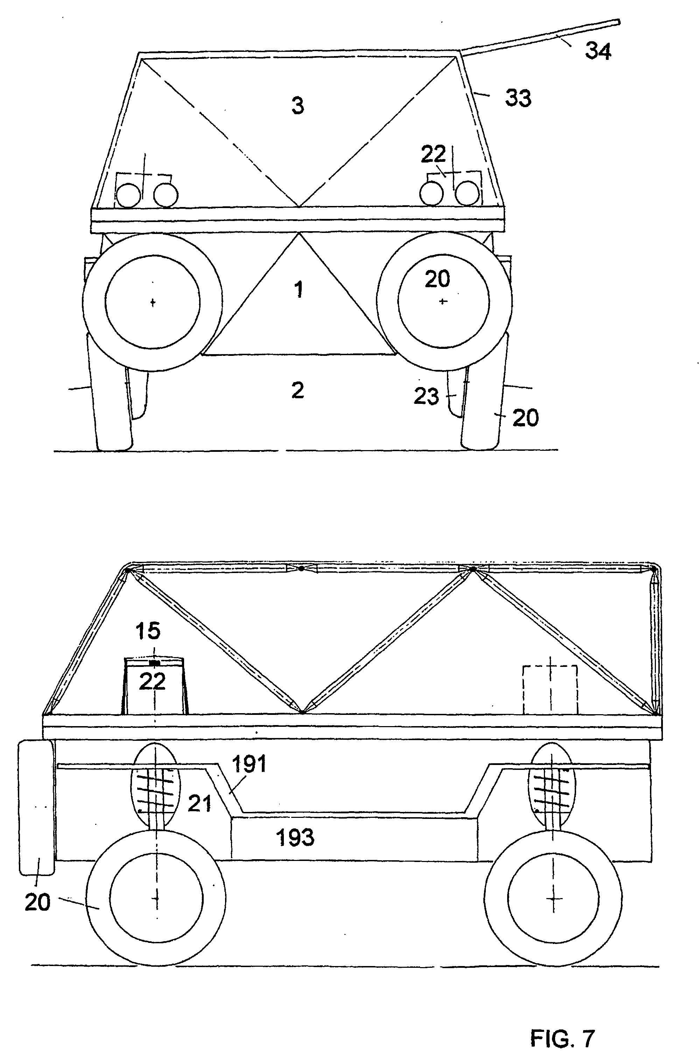

Der Vergleich mit einem sehr modernen kompakten PKW in der gleichen Figur 7 unten im gleichen Maßstab läßt erkennen, daß auch das Plattentragwerk ähnlichen Komfort in Hinblick auf den Fahrgastraum bietet wie dieses, sowohl was Sitzhöhe und Breite und insbesondere das Knickmaß betrifft. Die Sicherheit für Insassen ist wegen ihrer Integration in die Tragwerke sehr viel größer als im Wagenkasten eines normalen PKW. Zusätzliche Sicherheit kann im Fall der vorliegenden Erfindung erreicht werden, wenn das Stabtragwerk (3) durch innenliegende Längs- und Querstäbe (333) verstärkt wird.

In Figur 6 oben ist demonstriert, daß die modularen Parameter des Stabtragwerkes nicht unbedingt denen des Plattentragwerk entsprechen müssen. Im Prinzip gibt es eine sehr große Vielfalt an Gestaltungsmöglichkeiten durch die Änderung der Parameter, auch was die Höhe der Tragwerke betrifft.

Wie bekannt ist die Sicherheitsfrage bei kompakten Fahrzeugen im Vergleich zu großen Fahrzeugen mit entsprechenden Knautschzonen vorrangig. Im Falle der vorliegenden Erfindung sind die Tragwerke inhärent stabil in allen 3 Achsen wie bereits erwähnt, wenn auch eine geringe Verformung bei Unfällen möglich ist. Dies gilt sowohl für metallische Werkstoffe für Flächen und Stäbe als auch für nichtmetallische Werkzeuge wie Verbundmaterialien und (im Extremfall) verleimtes Holz. Mikroverbeulte Bleche erhöhen Stabilität und Verformbarkeit des Tragwerkes. Gemäß der vorliegenden Erfindung wird die mögliche Aufprallenergie durch eine zusätzliche Maßnahme aufgefangen und teilweise umgelenkt, und zwar sowohl durch den Einsatz von luftgefüllten Kissen als vor allem auch durch die Bereifung des Fahrzeuges. (Luftgefüllte Kissen, wie sie sich beim Transport schwerer Lasten bewährt haben, können in die seitlich zugänglichen Hohlräume (133) des Tragwerkes eingebaut werden). Wegen des geringen Radabstandes werden bei einem seitlichen Aufprall ein oder beide Räder (20) getroffen. Für den Aufprall von vorn und hinten sind im einfachsten Fall die Reservereifen vorgesehen, die über ihre Felgen (204) befestigt werden und bei denen die eigentlichen Reifen (205) als Puffer dienen.

Die Figur 7 zeigt das hier beschriebene Fahrzeug in Vorderund Seitenansicht. Es ist geländegängig (weil hochbeinig) und schwimmfähig, da das Plattentragwerk (1) nach unten und seitlich geschlossen ist. Ausnahmen davon werden später gezeigt. Man erkennt, daß der Fahrzeugboden frei von irgendwelchen Schläuchen, Kabeln, Hebeln oder sonstigen Aggregaten ist. Der Bodenabstand beträgt in dieser Darstellung im unbelasteten Zustand etwa 0,4 m. Man erkennt des weiteren die vorderen Puffer in Form der Reserveräder. Die Scheinwerfer beispielsweise befinden sich innerhalb der transparenten Abdeckung des Stabtragwerkes. Ein solches robustes und schwimmfähiges Fahrzeug kann seinen Einstieg nur in dem Stabtragwerk (3) haben. Dazu ist es notwendig, daß die transparente Hülle (33) Flügeltüren oder seitliche Klappen (34) enthält. Die Flügeltür ist für den geöffneten Zustand dargestellt. Spritzbleche (191) dienen auch dem leichten Einstieg als Trittbrett; unter dem Trittbrett ist Platz für zusätzliche Kästen (193).

### Fazit der Erfindung

Das hier vorgestellte Konzept läßt die Bildung von Ketten, wie sie in dem Porsche-Konzept entwickelt wurde, ebenfalls zu. Der wesentliche Unterschied besteht aber darin, daß der eigentliche Energiewandler direkt elektrische Energie abgibt, sich in jedem Fahrzeug befindet und daß Drehstrommotoren zum Einsatz kommen, die serienmäßig gefertigt werden, und die in gleicher Weise wie das Fahrzeug abgefedert werden. Elektrische Radnabenmotoren werden immer Sonderfertigungen sein und haben, da sie eine relativ große Masse im Vergleich zu hydraulischen Radnabenmotoren besitzen, den entscheidenden Nachteil, daß sie sämtliche Bewegungen des Rades ungefedert mitmachen müssen.

Das hier geschilderte Verfahren zum Bau von Fahrzeugen aus modularen Tragwerken und Einzelrad-Fahrwerken, mit chemoelektrischem Antrieb, vermag einen wirtschaftlichen Einstieg zu bieten in die zukünftige Situation, in der Kohlenwasserstoffe als Treibstoffe und Verbrennungsmotoren als Antriebe nicht mehr von Bedeutung sein werden. Die kostensparende wirtschaftliche Fertigung ist insbesondere wichtig für die Übergangszeit, in der chemoelektrische Wandler kostenmäßig im Nachteil sind gegenüber den seit rund 100 Jahren fortentwickelten Verbrennungsmotoren. Wirtschaftlich ist das hier gezeigte Verfahren deshalb, weil durch die Aufgliederung in 3 Komponenten eine weitgehend unabhängige parallele Fertigung möglich ist, und vor allem weil keinerlei dreidimensional gekrümmte großflächige Bauteile verwendet werden müssen. Dies ermöglicht sehr einfache Fertigungsanlagen, verzichtet auf kostspielige Formen, Gesenke und die dazugehörigen Pressen und gestattet auch den Einsatz nichtmetallischer Werkstoffe. Man muß sich dabei stets vor Augen halten, daß der eigentliche Aufschwung in der Produktion von Fahrzeugen dann gegeben ist, wenn auch Entwicklungs- und Schwellenländer dank des gestiegenen Lebensstandards ihrer Bevölkerung Fahrzeuge benötigen.

Das hier dargestellte Verfahren läßt durch die Auswahl der Parameter und der Nutzung der Hohlräume in dem Plattentragwerk sehr viele Variationen zu; es entsteht stets ein sehr robustes, kompaktes, leichtes und übersichtliches Fahrzeug, das dementsprechend einfach zugänglich insbesondere für die Wartung ist. Es gibt keine verborgenen, schwer zugängliche Ecken und Winkel, in denen sich Feuchtigkeit und Schmutz absetzen und zu Korrosion führen können. Es ist in diesem Sinne kein Designer-Fahrzeug, auch kein Modeartikel oder Drittfahrzeug : Es ist ein Nutzfahrzeug, das eine Aufgabe wahrnehmen kann, die bei Fahrzeugen mit Verbrennungsmotoren als Antrieb bisher lediglich landwirtschaftliche Traktoren übernehmen konnten : Energiedienstleistungen. Traktoren können über mechanische Wellen landwirtschaftliche Geräte, aber auch Häcksler, Pumpen und Sägen antreiben. Die hier geschilderten Fahrzeuge sind fahrbare elektrische Kraftwerke, die im Unterschied zu PKWs während des Parkens (das ja fast 90 % der Lebensdauer ausmacht) Arbeit verrichten können, indem sie elektrische Energie in Form von Drehstrom mit 50 oder 60 Hz an Verbraucher oder an Netze abgeben. Dadurch aber ist die Amortisation des Fahrzeuges eine ganz andere als sie es bisher sein konnte.

Gerade wegen des einfachen Aufbaus wird in diesem Fahrzeug das Potential eines modernen Rechnersystems voll genutzt, weit mehr als es in einem konventionellen PKW heute mit ABS und Fahrwerkkontrolle möglich ist. Das Rechnersystem kontrolliert nicht nur die chemoelektrische Energiewandlung vollständig sondern auch die Übertragung der elektrischen Energie auf die Einzelradfahrwerke bei Antrieb und Bremsen; es kontrolliert auch die Anlenkung der Einzelfahrwerke und stimmt sie aufeinander ab, es kann auch wie angedeutet die Federung eines jeden einzelnen Fahrwerks einstellen. Jegliche mechanische oder fluidische Kopplungselemente entfallen.

Ein letzter Aspekt sei erwähnt. Die Breite des normalen Bahnprofils läßt in der Wagenbreite Beladung von Gegenständen mit einer Ausdehnung von etwa 2,6 m zu. Auf diese Weise kann das hier gezeigte Fahrzeug mit n_{F} = 3 Modulen im Rastermaß von 0,8 m beispielsweise quer zur Fahrtrichtung der Züge in schnelle Züge eingeladen werden. Dadurch, daß sehr viele Fahrzeuge gleichzeitig und wie üblich in 2 Etagen einfahren können, verkürzt sich die Beladungszeit auf Minuten.

### Sonderformen und Anwendungen

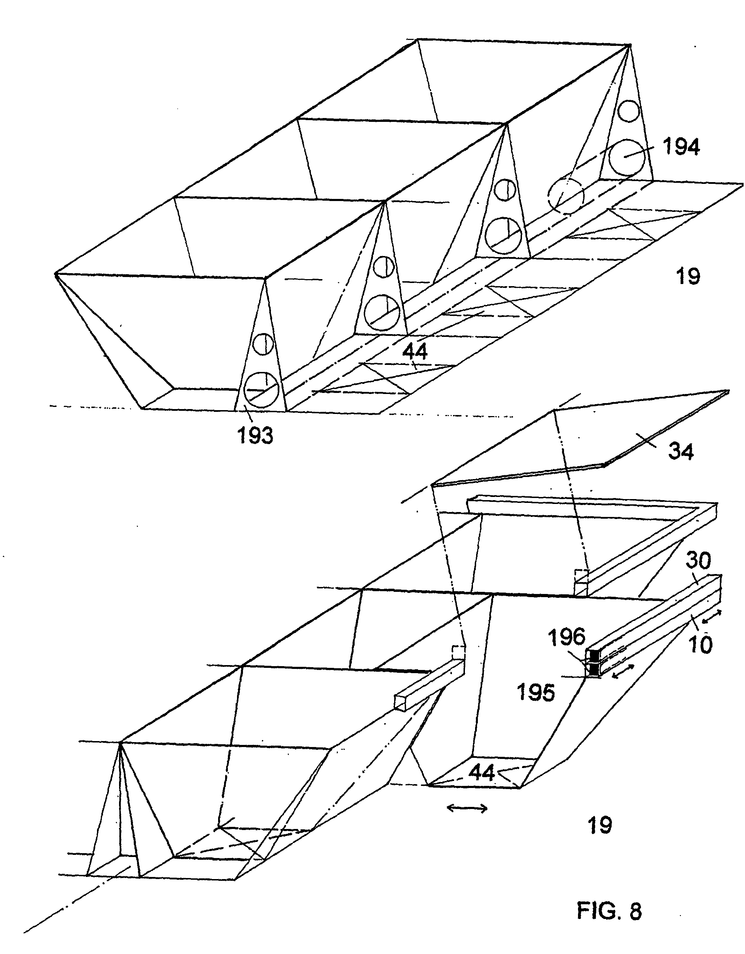

Es sei abschließend erwähnt, daß Sonderbauformen (19) für das Plattentragwerk (1) möglich sind. Beispielsweise ist es möglich, den Einstieg dadurch zu erleichtern, daß auf die Schwimmfähigkeit verzichtet und die äußere Umhüllung des Plattentragwerkes (1) durch Klappen zugänglich gemacht werden kann. Es ist eine weitere in Figur 8 unten gezeigte Vorrichtung (195) in diesem Zusammenhang denkbar, die sich mit einem normalen PKW kaum verwirklichen läßt und die etwa den Einstieg für behinderte und ältere Personen erleichtert. Ein Modul (195), der sich dem Rastermaß anpaßt und der die Sitzgelegenheit enthält, kann seitlich herausgefahren werden, sodaß der Einstieg von vorne möglich ist. Dieser Vorrichtung kommt entgegen, daß die Aufgaben der im PKW üblichen Pedale für Bremse, Kupplung und Gaspedal infolge der elektronischen Ausrüstung des Fahrzeuges auf einen einzigen Steuerknüppel mit Kabel übertragen werden können, wie er für Computerspiele allgemein gebräuchlich ist. Die Schwimmfähigkeit ist dadurch nur mehr bedingt gewährleistet. Da die beiden Rahmen (10) und (30) der Tragwerke unterbrochen werden, müssen sie während der Fahrt durch Bolzen (196) in den Vierkantrohren der Rahmen ähnlich wie bei Türen von Flugzeugen verriegelt werden. Dadurch wird auch die Stabilität der beiden Rahmen wieder hergestellt. Die Flügeltür (34) schützt den ausfahrbaren Modul (159) gegen die Witterung.

Eine weitere Besonderheit kann dadurch erreicht werden, daß das Plattentragwerk (1) intern ein oder mehrere durchgehende Rohre (194) in Längsrichtung enthält, die an ihren Enden beispielsweise wasserdicht verschlossen werden können. Dies ist in Figur 8 oben gezeigt. An die Stelle der inneren Querplatten können Schotten (193) eingesetzt werden. Dadurch wird das Tragwerk (1) entscheidend verstärkt. Es ist jetzt möglich, beispielsweise längere und schwerere Gegenstände und Gestänge dicht am Schwerpunkt zu befördern, ohne sie wie bisher üblich auf das Dach zu verfrachten, was mit Problemen verbunden ist. (Es sei angemerkt, daß das Plattentragwerk wie auch das Stabtragwerk zusätzliche Module zum Transport von Gegenständen seitlich aufnehmen kann). Ein einzelnes Rohr (194) kann auch zur Aufnahme einer Wasserpumpe als Antrieb dienen. Die Figur zeigt einen Zustand während der Fertigung, um die Übersichtlichkeit zu gewährleisten.

## Patentansprüche

1. Fahrzeug mit einem Antrieb, der einen chemoelektrischen Wandler (185) und mindestens einen Elektromotor (22) aufweist,
und mit einem Fahrzeugkörper, der aus einem Tragwerk (1, 3) und einem modular aufgebauten Fahrwerk (2) gebildet wird,
wobei sowohl im Tragwerk (1, 3) als auch im Fahrwerk (2) Einheiten des Antriebs angeordnet sind,
**dadurch gekennzeichnet,**
**daß** das Tragwerk (1, 3) aus einem die Module des Fahrwerks (2) aufnehmenden Plattentragwerk (1) und einem mit dem Plattentragwerk (1) verbundenen Stabtragwerk (3) besteht,
**daß** das Plattentragwerk (1) dreidimensional ausgebildet ist, aus modular neben- und hintereinander angeordneten, aus ebenen und gerollten Platten (11, 111, 112, 113, 16) begrenzten Hohlräumen (13) besteht und nach oben offen sowie nach unten und zu den Seiten geschlossen ist
und **daß** das Stabtragwerk (3) modular aus geraden Stäben (31) und Knoten (32) zusammengesetzt, nach unten offen sowie nach oben und zu den Seiten geschlossen ist.

2. Fahrzeug nach Anspruch 1, **dadurch gekennzeichnet, daß** das Plattentragwerk (1) und das Stabtragwerk (3) an ihrer offenen Seite über horizontale Rahmen (10, 30) mit gleichen Abmessungen kraftschlüssig, aber lösbar miteinander verbunden sind.

3. Fahrzeug nach Anspruch 1 oder 2, **dadurch gekennzeichnet, daß** die Räume (13) des Plattentragwerks (1) und die aus den Stäben (31) und Knoten (32) gebildeten Flächen des Stabtragwerks (3) durch dreieckförmige Elemente gebildet sind.

4. Fahrzeug nach mindestens einem der vorangehenden Ansprüche, **dadurch gekennzeichnet, daß** die ebenen und gerollten Platten (11, 16) aus Blechen und die geraden Stäbe (31) aus Hohlprofilen gebildet sind.

5. Fahrzeug nach mindestens einem der vorangehenden Ansprüche, **dadurch gekennzeichnet, daß** das Plattentragwerk (1) derart ausgebildet ist, daß es in allen drei Achsen bei Unfällen starke Kräfte aufnehmen kann und daß es nach außen wasserdicht und teilweise transparent abgeschlossen sowie schwimmfähig ist.

6. Fahrzeug nach mindestens einem der vorangehenden Ansprüche, **dadurch gekennzeichnet, daß** in den das Tragwerk (1) bildenden Hohlräumen (13) der chemoelektrische Wandler (185) und seine Hilfsbetriebe sowie Tanks (187), Sitzplätze (181, 182) für Fahrer und Mitfahrer, Stauräume (184) für Zuladungen und sonstige zu transportierende Geräte sowie für die Elektronik (186) integriert sind.

7. Fahrzeug nach mindestens einem der vorangehenden Ansprüche, **dadurch gekennzeichnet, daß** das den Fahrzeugkörper tragende Fahrwerk aus Einzelradfahrwerken (2) besteht, durch die das Fahrzeug getragen, gelenkt und fortbewegt wird.

8. Fahrzeug nach Anspruch 7, **dadurch gekennzeichnet,** das das Einzelradfahrwerk (2) aus einem Teleskop-Federbein (21) mit dem darin integrierten Elektromotor (22) und einem Umlenkgetriebe (23) besteht, wobei der Elektromotor (22) die Last des Fahrzeugkörpers, drehbar gelagert über Kugellager und Puffer (25), über sein Gehäuse auf das Teleskop-Federbein (21) und weiter auf ein Rad (20) des Einzelradfahrwerks (2) überträgt.

9. Fahrzeug nach Anspruch 8, **dadurch gekennzeichnet, daß** der Elektromotor (22) seine mechanische Leistung über eine in der Länge variierbare Antriebswelle (213, 214) im Teleskop-Federbein (21), parallel zum Stoßdämpfer (216), über das Umlenkgetriebe (23) in der Drehzahl untersetzt auf das Rad (20) überträgt, und an dessen Flansch (222) der Ansatz für das modulare Lenksystem (26) angebracht ist, wobei das Teleskop-Federbein (21) aus rechteckigen oder elliptischen Rohren (211, 212) besteht unbd das Drehmoment zum Anlenken des Rades (20) überträgt.

10. Fahrzeug nach mindestens einem der vorangehenden Ansprüche 7 bis 9, **gekennzeichnet durch** ein Rechnersystem, das die Koordinierung und Abstimmung der Einzelrad-Fahrwerke (2) Ansteuerung des Elektromotors (22) und der Anlenkung und Federung übernimmt.

11. Fahrzeug nach mindestens einem der vorangehenden-Ansprüche, **gekennzeichnet durch** unterschiedliche Parameter in beiden Tragwerken (1, 3).

12. Fahrzeug nach mindestens einem der vorangehenden Ansprüche, **dadurch gekennzeichnet, daß** die Platten (11, 16) und Stäbe (31) aus Metallen, Verbundmaterialien oder Laminaten auf der Basis von Kunststoffen oder aus verleimtem Holz oder einer beliebigen Kombination dieser Materialien bestehen, wobei dünne Bleche durch Mikrobeulung stabilisiert sind, und diese verschweißt, verklebt oder verschraubt werden.

13. Fahrzeug nach mindestens einem der vorangehenden Ansprüche, **dadurch gekennzeichnet, daß** der Elektromotor (22) mit seinem Gehäuse verstärkt wird und von einem Käfig (15) umgeben ist, der die Last auf das Tragwerk überträgt, als Schutz bei Unfällen dient und insbesondere die Führung der Kühlluft bewirkt.

14. Fahrzeug nach mindestens einem der vorangehenden Ansprüche, **dadurch gekennzeichnet, daß** das Fahrzeug Kabelanschlüsse und Elektronik aufweist, um während des Parkens elektrische Leistung synchronisiert in ein öffentliches Netz oder in einen dezentralen Verbraucher einzuspeisen.

15. Fahrzeug nach mindestens einem der vorangehenden Ansprüche, **dadurch gekennzeichnet, daß** das Plattentragwerk (1) ein oder mehrere Rohre (194) in Längsrichtung enthält, die das Plattentragwerk (1) durchziehen und die an ihren Ende optional verschlossen werden können, um lange und schwere Lasten oder eine Pumpe aufnehmen zu können und gleichzeitig zur Verstärkung dienen.

16. Fahrzeug nach mindestens einem der vorangehenden Ansprüche, **dadurch gekennzeichnet, daß** ein oder mehrere Module (195) des Plattentragwerkes (1) zum leichteren Einsteigen oder Beladen teilweise in Querrichtung herausgefahren werden können.

17. Fahrzeug nach mindestens einem der vorangehenden Ansprüche, **dadurch gekennzeichnet, daß** die Teilung des Plattentragwerkes (1) in Längs- und Querrichtung vorteilhaft im Bereich um 0,8 m, in der Höhe um 0,5 m liegt und die Höhe des Stabtragwerkes (3) um 0,6 m beträgt.

18. Fahrzeug nach mindestens einem der vorangehenden Ansprüche, **dadurch gekennzeichnet, daß** Reserveräder vorn und hinten angeordnet sind, die als luftgefüllter Puffer des Fahrzeugs gegen Auffahrunfälle schützen.

19. Fahrzeug nach mindestens einem der vorangehenden Ansprüche, **dadurch gekennzeichnet, daß** ein Kompaktfahrzeug aus zwei Modulen parallel und drei Modulen in der Längsrichtung zum Transport in der Eisenbahn quer zur Fahrtrichtung des Zuges aufgebaut ist.

## Claims

1. A vehide as powered by a chemoelectric converter (185), as driven by at least one electric motor (22), and as composed from a self-supporting structure (1,3) as well as from a modular propulsion system (2), parts of the latter attached both to the self-supporting structure (1,3) as well as to the modular propulsion system (2),
**characterised by** the fact,
that the self-supporting structure (1,3) is composed from two parts which are connected to each other, the first one being a self-supporting lattice structure made from plates (1), incorporating the modules of the propulsion system (2), the other one being a self-supporting lattice structure made from bars (3),
and that the lattice structure made from plates (1) is a three-dimensional one containing voids (13), arranged side by side and one after the other, constructed in a modular way from flat as well as from bend plates (11,111,112,113,16), and is open on its upper side and closed on all other sides,
and that the lattice structure made from bars (3), constructed in a modular way from straight rods (31) and knots (32), is open on its bottom side and closed on all other sides.

2. A vehicle according to claim 1,
of which both the lattice structure made from plates (1) and the lattice structure made from bars (3) are connected strongly but reversible to each other by horizontal frames (10, 30) of equal dimensions positioned at the structures open sides.

3. A vehicle according to claims 1 and 2,
in which the voids (13) both inside the lattice structure made from plates (1) and the surfaces coming into being by the rods (31) and knots (32) of the lattice structure made from bars (3), are of triangular shape.

4. A vehicle according at least to one of the foregoing claims,
in which the flat and bend plates (11, 16) are materialised by sheets, and in which the straight rods (31) are materialised by hollow core profiles.

5. A vehicle according at least to one of the foregoing claims,
the lattice structure of which made from plates (1) is constructed in order to withstand forces in all three directions in case of accidents, and which is floating, tightened completely but by parts transparently, in regard to water.

6. A vehicle according at least to one of the foregoing claims,
in which the chemoelectric converter (185) and its auxiliaries, fuel-tanks (187), seats (181,182) for driver and passengers as well as loading spaces (184) for cargo and any other equipment as well as for the electronics (186) are integrated into the voids (13) of the supporting structure (1).

7. A vehicle according at least to one of the foregoing claims,
the propulsion system of which consists of single-wheel-propulsion-units (2) in order to carry, to move and to direct the vehicle.

8. A vehicle according to claim 7,
a single-wheel-propulsion-unit (2) of which, each being composed from a modified Mc Pherson strut (21) with an electric motor (22) as well as with an angle transmission gear (23) integrated, transfers the mass of the residual vehicle via the case of the electric motor (22), the modified Mc Pherson strut (21) to the wheel (20) of the single-wheel-propulsion unit (2), whereby the electric motor's case is provided with bearings and a shock-absorber (25) enabling the single-wheel-propulsion-unit to be revolved.

9. A vehicle according to claim 8,
an electric motor (22) of which being part of a single-wheel-propulsion-unit transmits its mechanical power to the wheel (20) by a shaft of variable length (213, 214) located inside the modified Mc Pherson strut (21) in parallel to the main shock absorber (216) as well as by the angle transmission gear (23) reducing the number of revolutions per minute, whereby the electric motors flange (222) is coupled with the modular steering-system (26), and whereby the modified Mc Pherson strut (21) is based on tubes of rectangular or elliptic cross-section (211, 212) in order to transmit radial forces necessary to direct the wheel (20).

10. A vehicle according at least to one of the foregoing claims 7 to 9,
in which both coordination and tuning of the single-wheel-propulsion-units (2) including spring- and steering devices, as well as control of the electric motor (22) is performed by an electronic computer-system.

11. A vehicle according at least to one of the foregoing claims,
both the lattice structures of which made from plates and made from bars (1, 3) have different parameters.

12. A vehicle according at least to one of the foregoing claims,
in which both the plates (11, 16) as well as the rods (31) are made from metals, compound or laminated materials based on plastics or glued wood, or any other combination of the materials mentioned before, whereby thin sheets are stabilised by denting, and in which plates and rods are connected by welding, gluing or screwing

13. A vehicle according at least to one of the foregoing claims,
in which the electric motor (22) is reinforced in regard to its case and surrounded by a cage (15) in order to transmit the load to its single-wheel-propulsion unit, to shelter it in case of accident and to channel air for its cooling.

14. A vehicle according at least to one of the foregoing claims,
in which sockets are provided in order to transmit electric power to the public network or to a decentralised consumer during parking, assisted by an electronic system for synchronisation.

15. A vehicle according at least to one of the foregoing claims,
the lattice structure of which made from plates (1) is reinforced by at least one tube (194) arranged inside the lattice structure (1) and in parallel to its longitudinal axis, to be used for loading heavy and bulky long equipment when closed properly at both ends, or for installing a pump.

16. A vehicle according at least to one of the foregoing claims,
in which one or more modules (195) of the lattice structure made from plates (1) can be moved partially and transverse to the longitudinal axis of vehicle in order to facilitate boarding of passengers or loading of goods.

17. A vehicle according at least to one of the foregoing claims,
the partition of the lattice structure of which made from plates (1) in longitudinal as well as in transversal direction favourably is about 0.8 m in length and about 0.5 m in height, while the height of the lattice structure made from bars (3) should be about 0.6 m.

18. A vehicle according at least to one of the foregoing claims,
in which the spare wheels are placed in front and in rear of the lattice structure made by planes in order to react as air-filled shock-absorbers in case of accident

19. A vehicle according at least to one of the foregoing claims,
to be transported by railway transverse to the direction of train in form of a compact car, which is composed from two modules of the lattice structure made by planes in parallel and from three modules in length.

## Revendications

1. Véhicule qui est propulsé par une cellule électrochimique (185) et au moins par un moteur électrique (22), dont la carrosserie est constituée par une structure autoportante (1,3) et un sous-châssis en construction modulaire (2), dont les éléments de propulsion (2) sont arrangés dans le sous-châssis (1,3) et dans la structure autoportante,
**caractérisé par le fait,**
**que** la structure autoportante (1,3) est constituée par une structure formée des plaques (1) et une structure formée de barres (3) assemblées l'une avec l'autre, et que les modules de sous-châssis sont porteurs de la structure formée des plaques (1),
**que** la structure formée des plaques (1) est une structure tri-dimensionelle ouverte en haut et fermée de tous autres côtés, et que la structure comprend des espaces creux (13), formée par des plaques pleines et roulées (11,111,112,113,16), situé l'un à côté de l'autre et l'un derrière l'autre,
**que** la structure formée de barres (3), ouverte en bas et fermée de tous autres cotés, est assemblée d'une manière modulaire utilisant les barres (31) et des noeuds (32).

2. Véhicule selon la revendication 1, **caractérisé par le fait,**
**que** la structure formée des plaques (1) et la structure formée des barres (3) sont assemblée à leur côté ouvert par des cadres horizontaux (10,30) qui font partie des deux structures, et que les structures sont démontables.

3. Véhicule selon les revendications 1 et 2, **caractérisé par le fait,**
**que** les espaces creux (13) de la structure formée des plaques (1) sont formées de modules triangulaires, et que les faces formé par des barres (31) et des noeuds (32) de la structure formée de barres (3) sont formée de modules triangulaires.

4. Véhicule selon les revendications 1 - 3, **caractérise par le fait,**
**que** les plaques pleines et les plaques roulés (11,13) sont construits de tôle, et que les barres (31) sont constituées par un profil à face concave.

5. Véhicule selon l'une des revendications, **caractérisé par le fait,**
**que** la structure formée des plaques (1) est construite pour résister aux forces vigoureuses de tous les côtés en cas d'accident, et qui est imperméable, partiellement transparente, et flottante.

6. Véhicule selon l'une des revendications, **caractérisé par le fait,**
**que** les espaces creux (13) de la structure autoportante (1) qui délimitent un habitacle, sont porteurs de la cellule électrochimique (185) et ses systèmes auxiliaires, du réservoir de carburants (187), des sièges (181,182) pour un pilote et pour les autres occupants, des plateaux des charges (184) et du système électronique (186).

7. Véhicule selon l'une des revendications, **caractérisé par le fait,**
**que** le sous-châssis, qui porte la structure autoportante, est constitué de corps élémentaires (2), et que oes modules agitent et dirigent le véhicule.

8. Véhicule selon la revendication 7, **caractérisé par le fait,**
**que** le corps élémentaire du sous-châssis (2) est constitué par une seule roue (20), par une jambe de suspension (21), par un moteur électrique (22) intégré dans la jambe de suspension et un renvoi d'angle réducteur (23) intégré également et que le moteur électrique (22), utilisant butée, roulement à billes et amortisseur (25) intercalant entre moteur et la structure autoportante, transfert la masse de structure autoportante par la jambe de suspension (21) sur la roue (20) du corps élémentaire (2).

9. Véhicule selon la revendication 8, **caractérisé par le fait,**
**que** le moteur électrique (22) transmet la puissance mécanique sur un arbre (213,214) dans la jambe de suspension (21), qui peut varier sa longueur d'accord avec un amortisseur central (216), par le renvoi d'angle réducteur (23) sur la roue (20), et que le moteur électrique par son bride (222) est articulé pour servir de timonerie de mécanisme de direction modulaire (26), et que la jambe de suspension (21) est constituée des tubes rectangulaires ou elliptiques (211,212) pour transmettre la force tournante sur la roue (20).

10. Véhicule selon la revendication 7 - 9, **caractérisé par le fait,**
**qu'** un système électronique coordonne les mouvements des corps élémentaires de sous-châssis (2), la direction modulaire de chaque corps et la puissance mécanique des moteurs électriques (22).

11. Véhicule selon l'une des revendications, **caractérisé par le fait,**
**que** les constantes de réseau de structure formée des plaques et de structure des barres (1,3) sont différentes.

12. Véhicule selon l'une des revendications, **caractérisé par le fait,**
**que** les plaques (11,16) et les barres (31) sont constituées par des métaux, et par des matériaux composites, par agglomères laminés chaque à la base de matière artificielle et de matériaux dérivés de bois colle ou par une combinaison de ces matériaux, et que les tôles légères sont cabossées en miniature pour de la stabilité, et que toutes les tôles et barres ou tubes sont assemblés par exemple par soudage, par collage, par boutonnage.

13. Véhicule selon l'une des revendications, **caractérisé par le fait,**
**que** le moteur électrique (22) est fortifié par rapport à sa construction, et que le moteur est entouré de cage (15) pour transmettre la masse de structure autoportante à la jambe de suspension et pour concourir à la sécurité des passagers en cas d'accident, et pour ré circulation d'air réfrigérant.

14. Véhicule selon l'une des revendications, **caractérisé par le fait,**
**que** le véhicule comprend câbles, connecteurs rapides et systèmes électroniques pour transmettre la puissance électrique dans le réseau de distribution électrique ou consommateur décentralisée en cas de stationnement.

15. Véhicule selon l'une des revendications, **caractérise par le fait,**
**que** la structure formée des plaques (1) contenait au moins un des tubes (194) longitudinaux pour fortifier la structure (1) et pour transporter le matériel très long et gros ou de pompe, et que chaque tube est bouché quand nécessaire.

16. Véhicule selon l'une des revendications, **caractérise par le fait,**
**que** au moins un des modules (195) de la structure des plaques (1) est articulé pour servir de porte à l' habitacle, si déplacé en sens transverse, pour débarquement facile.

17. Véhicule selon l'une des revendications, **caractérise par le fait,**
**que** la partition longitudinale et transverse de la structure formée des plaques (1) se monte au moins à 0,8 m, et que la partition en hauteur de la structure formée des plaques se monte à 0,5 m et la partition en hauteur de la structure des barres (3) se monte au moins à 0,6 m.

18. Véhicule selon l'une des revendications, **caractérise par le fait,**
**que** les roues de rechange sont montées en avant et en arrière de la structure formée des plaques pour servir de tampon en cas d'accident frontal.

19. Véhicule selon l'une des revendications, **caractérisé par le fait,**
**que** la structure formée des plaques d'un véhicule compact pour transport de chemin de fer en sens transverse comprend six modules, et que la longueur hors tout véhicule compact est définie par trois modules.
